# EUROPEAN PATENT APPLICATION

(11) **EP 3 726 111 A1**
(43) Date of publication of application: **21.10.2020**
(21) Application number: 20169814.9
(22) Date of filing: 16.04.2020
(51) Int. Cl.: F16K 27/02, F16K 31/06, H01F 7/16

(54) **FLUID CONTROL VALVE**

(30) Priority: 16.04.2019 JP 2019077894
(71) Applicant: AISIN SEIKI KABUSHIKI KAISHA, Kariya-shi, Aichi-ken 448-8650 (JP)
(72) Inventor: SATO, Atsushi, KARIYA-SHI, AICHI-KEN, 448-8650 (JP); OGATA, Ryota, KARIYA-SHI, AICHI-KEN, 448-8650 (JP)
(74) Representative: Cabinet Beau de Loménie

(57) **Abstract**

A fluid control valve (4, 204, 504) includes: a valve main body (41, 241) including a circulation hole (41e) through which a fluid flows and a yoke (41f) that has a valve seat (41h) provided in the circulation hole and has magnetism; a valve body (42) controlling flow of the fluid by abutting on the valve seat when the valve body is seated and separating from the valve seat when the valve is opened, and having magnetism; an electromagnetic coil (44c) provided on the valve main body, and generating a magnetic field to attract the valve body to the valve seat; and a buffer member (45, 245, 545) that abuts on the valve body that moves in a valve closing direction to reduce a moving speed of the valve body after a valve closing operation is started and before the valve body is seated.

## Description

### TECHNICAL FIELD

This disclosure relates to a fluid control valve, and more particularly, to a fluid control valve including a valve main body including a yoke having magnetism and a valve body having magnetism.

### BACKGROUND DISCUSSION

In the related art, there has been known a fluid control valve including a valve main body including a yoke having magnetism and a valve body having magnetism (for example, see JP 2015-121247A).

JP 2015-121247A discloses a fluid control valve including a housing (valve main body) including a fixed yoke (yoke) having magnetism and a valve body having magnetism. This fluid control valve includes an electromagnetic coil. The face on the valve body side of the fixed yoke has a valve seat. The electromagnetic coil is configured such that, when energized, a magnetic field is generated in the fixed yoke to attract the valve body to the valve seat of the fixed yoke.

The fluid control valve disclosed in JP 2015-121247A is configured to move the valve body in a valve opening direction when the energization to the electromagnetic coil is released. The fluid control valve is configured to move the valve body in a valve closing direction when the electromagnetic coil is energized. The fluid control valve is configured to close the valve while maintaining the seated state in which the valve body is seated on the valve seat by maintaining the state in which the electromagnetic coil is energized.

However, in the fluid control valve of JP 2015-121247A, when the valve body is attracted to the valve seat by the magnetic field generated in the fixed yoke by the electromagnetic coil, there is a disadvantage that a collision sound is generated due to the valve body abutting on the valve seat.

Therefore, in order to solve the above-mentioned inconvenience, a pressure reducing valve (fluid control valve) for suppressing a collision sound at the time of opening and closing the valve has been proposed in the related art (for example, see JP 2016-183708A). The pressure reducing valve includes a cylinder, a piston movably provided in the cylinder, a rod extending from the piston, and a valve body provided on the rod. The pressure reducing valve is configured to switch between a valve-opened state and a valve-closed state of the valve body by the movement of the piston in the cylinder. Further, the pressure reducing valve is provided with a buffer member for suppressing a collision sound (hitting sound) between the face of the piston and the face of the cylinder, which are opposed to each other in the moving direction of the cylinder. The buffer member is disposed on the outer surface of the cylinder facing the inner surface of the piston in the opening and closing direction of the cylinder.

Here, in order to suppress the generation of a collision sound caused by the valve body abutting on the valve seat, it is conceivable to apply the buffer member of JP 2016-183708A to the fluid control valve of JP 2015-121247A and attach the buffer member to an inner surface of the housing at a position where the buffer member abuts on the valve body. However, in this case, the collision sound between the valve body and the valve seat is suppressed, but the buffer member is sandwiched between the valve body and the valve seat. The buffer member makes it difficult for the valve body to seat on the valve seat, and a gap is generated between the valve body and the valve seat. In this case, the magnetic resistance becomes larger due to the gap between the valve seat of the yoke and the valve body, and the magnetic force between the valve seat and the valve body decreases. Therefore, there is a disadvantage that the valve closing holding force for maintaining the valve-closed state decreases. For this reason, it is desired to reduce the collision sound between the valve body and the valve seat while generating a sufficient valve closing holding force for maintaining the valve-closed state.

Thus, a need exists for a fluid control valve capable of generating a sufficient valve closing holding force for maintaining a valve-closed state and reducing a collision sound between a valve body and a valve seat.

### SUMMARY

A fluid control valve according to an aspect of this disclosure includes: a valve main body including a circulation hole through which a fluid flows and a yoke that has a valve seat provided in the circulation hole and has magnetism; a valve body that controls the flow of the fluid flowing out of the circulation hole by abutting on the valve seat when the valve body is seated and separating from the valve seat when the valve is opened, and has magnetism; an electromagnetic coil provided on the valve main body, and generating a magnetic field in the valve main body to attract the valve body to the valve seat; and a buffer member that abuts on the valve body that moves in a valve closing direction to reduce a moving speed of the valve body after a valve closing operation is started and before the valve body is seated, in which, the buffer member is configured such that, after the buffer member abuts on the valve body, an abutting portion on the valve body is movable from an abutting position on the valve body to a seating corresponding position corresponding to a seating position at which the valve body abuts on and seats on the valve seat.

The fluid control valve according to the aspect of this disclosure is, as described above, provided with the buffer member that abuts on the valve body moving in the valve closing direction to reduce the moving speed of the valve body after the valve closing operation is started and before the valve body is seated. Then, the buffer member is configured such that, after the buffer member abuts on the valve body, an abutting portion is movable from the abutting position on the valve body to the seating corresponding position corresponding to the seating position at which the valve body abuts and seats on the valve seat. This allows the abutting portion of the buffer member to move together with the valve body until the seating position is reached, so that the valve body can be securely seated on the valve seat, and the generation of a gap between the valve seat of the yoke and the valve body can be suppressed even when the buffer member is provided. In addition, since the moving speed of the valve body can be reduced by the buffer member until the valve body reaches the seating position, the collision sound between the valve body and the valve seat can be reduced. As a result, the magnetic resistance caused by the gap between the valve seat of the yoke and the valve body can be substantially eliminated, and a sufficient valve closing holding force for maintaining the valve-closed state can be generated, and the collision sound between the valve body and the valve seat can be reduced. In addition, since the moving speed of the valve body can be reduced by the buffer member until the valve body reaches the seating position, the load applied to both the valve body and the valve seat at the time of collision can be reduced. As a result, it is only necessary to perform a plating process for general corrosion prevention without performing a plating process for adding wear resistance to the valve body and the valve seat, so that the plating process of the fluid control valve can be simplified.

In the fluid control valve according to the above aspect, at least a distal end of the buffer member on the valve body side may be disposed at a position separated from the valve body between the valve body and the valve seat when the valve is opened, and the buffer member may be configured such that the distal end portion as the abutting portion is movable from a position separated from the valve body as the abutting position on the valve body to the seating corresponding position after the valve closing operation is started.

With this configuration, as compared with the case where the moving speed of the valve body is reduced by abutting on the valve body from the time of valve opening, the distal end portion of the buffer member abuts on the valve body, and the distance for reducing the moving speed of the valve body can be reduced, and thereby the time required for the valve body to be seated on the valve seat can be shortened.

In the fluid control valve according to the above aspect, at least a distal end portion of the buffer member on the valve body side may be formed of an elastically deformable material.

With this configuration, not only the collision sound when the valve body is seated on the valve seat but also the collision sound when the valve body abuts on the distal end portion of the buffer member can be reduced. Therefore the generation of sound caused by the fluid control valve can be more reliably suppressed.

In the fluid control valve according to the above aspect, at least a distal end portion of the buffer member may be disposed inside the valve seat, and the distal end portion of the buffer member may be configured to abut on a portion inside the valve seat, in a valve seat-side surface of the valve body from the abutting position on the valve body to the seating corresponding position after the valve closing operation is started, and the valve seat may be configured to abut on a portion outside the distal end portion of the buffer member, in the valve seat-side surface of the valve body at the seating position.

With this configuration, the size of the distal end portion of the buffer member can be limited in the direction orthogonal to the valve closing direction, as compared with the case where the distal end portion of the buffer member is provided outside the valve seat, so that an increase in the size of the buffer member can be suppressed. Further, as compared with the case where the portion in the valve seat-side surface of the valve body at the seating position on which the valve seat abuts is provided inside the distal end portion of the buffer member, since the size of the valve seat can be prevented from being limited in the direction orthogonal to the valve closing direction, a larger magnetic force can be generated between the valve seat and the valve body by providing the valve seat large. As a result, it is possible to suppress an increase in the size of the fluid control valve and to generate a sufficient valve closing holding force to maintain the valve-closed state.

In this case, the buffer member may include a support portion disposed in the circulation hole, and a first urging member for urging the support portion toward the valve body, and the support portion may be configured to be urged by the first urging member to reduce the moving speed of the valve body in the valve closing direction when the buffer member moves from the abutting position to the seating corresponding position after the valve closing operation is started.

According to this structure, the moving speed of the valve body can be reduced only by urging the support portion in the valve opening direction by the first urging member, so that the moving speed of the valve body can be reduced by a simple structure.

In the fluid control valve provided with the buffer member including the support portion, the support portion may have a cylindrical portion in which a hole for circulation penetrating in the valve closing direction is formed as a part of the circulation hole, and the cylindrical portion may have an outflow hole which penetrates in a direction orthogonal to the valve closing direction and allows the fluid in the hole for circulation to flow out of the cylindrical portion.

With this configuration, the fluid flowing into the hole for circulation in the cylindrical portion can flow out of the cylindrical portion from the hole for circulation as well as the outflow hole. Therefore, the flow of the fluid flowing out of the cylindrical portion can be made smoother. Accordingly, in the state in which the flow of the fluid flowing out of the cylindrical portion is made smoother even when the valve body and the support portion are abutting on each other and the valve body and the support portion move in the valve closing direction, the valve body and the support portion can be moved in the valve closing direction, so that the valve body and the support portion can be moved smoothly in the valve closing direction.

In the fluid control valve having the buffer member having at least a distal end portion formed of an elastically deformable material, the buffer member may include a foamed rubber member that causes the distal end portion to abut on the valve seat-side surface of the valve body from the abutting position on the valve body to the seating corresponding position after the valve closing operation is started, and absorbs and reduces the moving speed accompanying a movement of the valve body in the valve closing direction, and the valve main body includes an accommodation recessed portion that is depressed in the valve closing direction and stores the foamed rubber member when seated.

With this configuration, since it is possible to reduce the moving speed of the valve body, reduce the collision sound when the valve body is seated on the valve seat, cause the valve body to abut on the distal end portion of the buffer member, and reduce the collision sound, only with the foamed rubber member, the buffer member can have a simple structure.

In the fluid control valve according to the above aspect, the following configuration may be considered.

### Appendix 1

That is, in the fluid control valve including the buffer member configured such that the distal end portion is movable from the contact position to the seating corresponding position, the buffer member is configured such that the distal end portion is integrally movable with the valve body from the abutting position with the valve body to the seating corresponding position.

With this configuration, the moving speed of the valve body can be constantly reduced from the abutting position to the seating corresponding position. Therefore, even when the distance for reducing the moving speed of the valve body is reduced, the moving speed of the valve body can be reliably reduced to a desired moving speed.

### Appendix 2

The fluid control valve including the support portion urged by the first urging member further includes a second urging member configured to urge the valve body toward the valve opening side at a portion disposed in the circulation hole of the support portion and a second storage portion for storing the second urging member is provided on an outer peripheral portion of a portion disposed in the circulation hole of the support portion.

According to this structure, by providing the second storage portion, the structure of the fluid control valve that maintains a state in which the valve is opened by the second urging member can be prevented from becoming complicated. Further, by urging the valve body in the valve opening direction by the second urging member, it is possible to reduce the moving speed of the valve body when the valve body is seated on the valve seat, and reduce the collision sound between the valve body and the valve seat. As a result, it is possible to suppress the complexity of the structure of the fluid control valve while reducing the moving speed of the valve body and the collision sound between the valve body and the valve seat.

### Appendix 3

In the fluid control valve including the support portion urged by the first urging member, the support portion further includes a first storage portion for storing the first urging member provided outside the circulation hole and inside the valve main body in a direction orthogonal to the valve closing direction. In a direction orthogonal to the valve closing direction, at least one of between the outer peripheral surface of the first storage portion and the inner peripheral surface of the valve main body or between the inner periphery of the first storage portion and the inner peripheral surface of the valve main body is formed with a minute gap through which a fluid can flow.

According to this structure, this allows the fluid pushed by the valve body and the support portion moving in the valve closing direction to flow through the valve main body, so that the fluid can pass through the minute gap. That is, the moving speed of the support portion can be reduced using the flow path resistance generated when the fluid passes through the minute gap. As a result, not only the urging force of the first urging member but also the flow path resistance can be used to reduce the moving speed of the support portion. Therefore, the moving speed of the valve body can be further reduced compared with the case where the moving speed of the valve body is reduced by reducing the moving speed of the support portion only by the urging force.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic view of a vehicle cooling system according to a first embodiment;
Fig. 2 is a cross-sectional view of a fluid control valve according to the first embodiment;
Fig. 3A is a cross-sectional view taken along the line IIIA-IIIA in Fig. 4; Fig. 3B is a cross-sectional view taken along the line IIIB-IIIB in Fig. 4;
Fig. 4 is an enlarged cross-sectional view showing a valve-opened state of the fluid control valve according to the first embodiment;
Fig. 5 is an enlarged cross-sectional view showing an abutting state of the fluid control valve according to the first embodiment;
Fig. 6 is an enlarged cross-sectional view showing a seated state of the fluid control valve according to the first embodiment;
Fig. 7 is a perspective view of a support portion of the fluid control valve according to the first embodiment;
Fig. 8 is a cross-sectional view taken along line VIII-VIII in Fig. 7;
Fig. 9 is an enlarged cross-sectional view showing a state between the abutting state and the seated state of the fluid control valve according to the first embodiment;
Fig. 10 is a graph showing a relationship between a stroke amount of a valve body and time when the fluid control valve according to the first embodiment is closed;
Fig. 11 is an enlarged cross-sectional view showing a valve-opened state of a fluid control valve according to a second embodiment;
Fig. 12 is a cross-sectional view taken along the line XII-XII in Fig. 11;
Fig. 13 is an enlarged cross-sectional view showing an abutting state of the fluid control valve according to the second embodiment;
Fig. 14 is an enlarged cross-sectional view showing a seated state of the fluid control valve according to the second embodiment;
Fig. 15 is an enlarged cross-sectional view showing a valve-opened state of a fluid control valve according to a third embodiment;
Fig. 16 is a perspective view of a support portion of the fluid control valve according to the third embodiment;
Fig. 17 is a cross-sectional view taken along line XVII-XVII in Fig. 16; and
Fig. 18 is an enlarged cross-sectional view showing a state between an abutting state and a seated state of the fluid control valve according to the third embodiment.

### DETAILED DESCRIPTION

Hereinafter, embodiments disclosed here will be described with reference to the drawings.

### First Embodiment

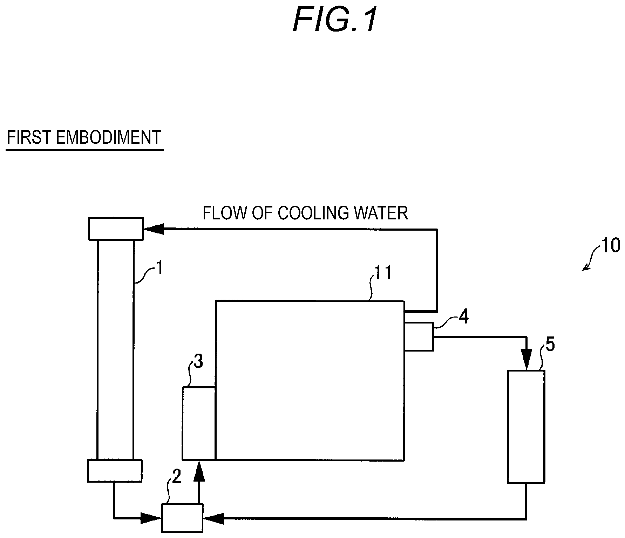

First, the configuration of a fluid control valve 4 according to the first embodiment will be described with reference to Figs. 1 to 9. As shown in Fig. 1, the fluid control valve 4 is used in a vehicle cooling system 10 that cools an engine 11 of a vehicle such as an automobile. Here, the vehicle cooling system 10 is a device that cools cooling water (coolant: an example of "fluid" in the appended claims) that is a liquid for performing heat exchange with the engine 11 and circulates the cooling water in the vehicle. The vehicle cooling system 10 is connected to the engine 11.

The vehicle cooling system 10 includes a radiator 1, a thermostat valve 2, a water pump 3, the fluid control valve 4, and a heater core 5.

The radiator 1 is configured to cool the cooling water heated by the heat exchange with the engine 11 by the heat exchange with the outside air. The thermostat valve 2 is configured not to supply the engine 11 with cooled cooling water having a predetermined temperature or less. That is, the thermostat valve 2 closes the flow path when the temperature of the cooling water is equal to or lower than the predetermined temperature. Further, the thermostat valve 2 opens the flow path when the temperature of the cooling water exceeds the predetermined temperature. The water pump 3 is configured as a power source for circulating cooling water. The fluid control valve 4 is configured to control the supply or stop of the supply of the cooling water to the heater core 5. A detailed description of the fluid control valve 4 will be described later. The heater core 5 is configured to heat air by radiating heat of the cooling water heated by heat exchange with the engine 11. That is, the heater core 5 is an in-vehicle heating device of the vehicle.

In the vehicle cooling system 10, the cooling water discharged from the water pump 3 is heated inside the engine 11 and cooled by the radiator 1, and then returns to the engine 11 via the thermostat valve 2. In the vehicle cooling system 10, when the engine 11 is at a low temperature, the cooling water discharged from the water pump 3 returns to the engine 11 via the engine 11, the fluid control valve 4, the heater core 5, and the thermostat valve 2 in this order instead of flowing to the radiator 1 by switching the thermostat valve 2 to the closed state and the fluid control valve 4 to the opened state.

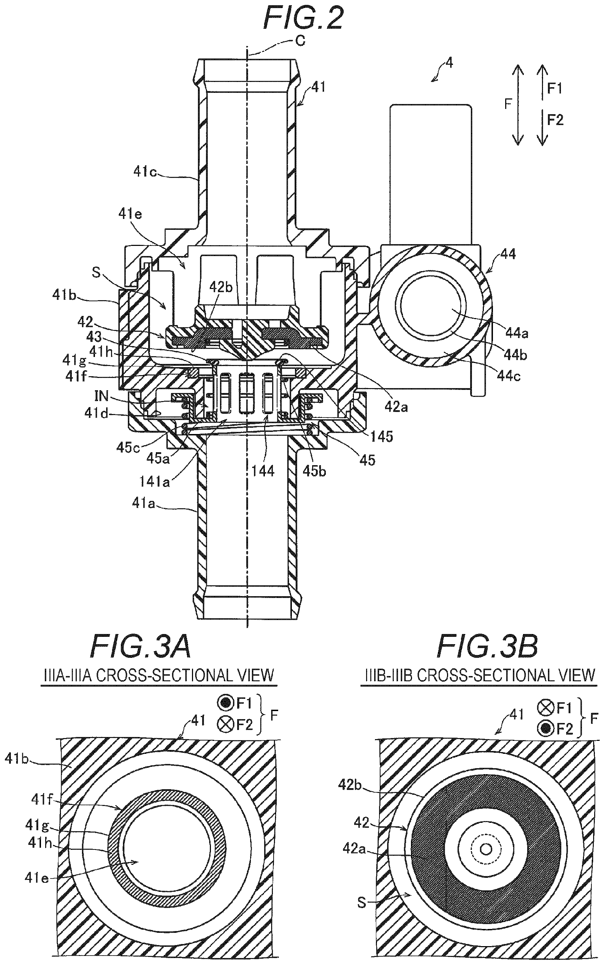

As shown in Fig. 2, the fluid control valve 4 is configured to switch between the flow of the cooling water and the stop of the flow of the cooling water. Specifically, the fluid control valve 4 includes a valve main body 41, a valve body 42, a valve opening urging member 43, a solenoid 44, and a buffer member 45. Here, the flow direction of the cooling water is defined as an F1 direction, the direction opposite to the F1 direction is defined as an F2 direction, and the F1 direction and the F2 direction are defined as an F direction.

The valve main body 41 has a substantially cylindrical shape. The valve main body 41 is formed of a hard resin material such as a plurality (three) of polyphenylene sulfide resins arranged in the F direction. The valve main body 41 has an inflow-side connecting portion 41a, a valve body storage portion 41b, and an outflow-side connecting portion 41c in this order from the F1 direction side. The valve main body 41 is integrally formed by ultrasonically welding the inflow-side connecting portion 41a, the valve body storage portion 41b, and the outflow-side connecting portion 41c to each other.

The inflow-side connecting portion 41a is connected to a flow path through which cooling water flows in the engine 11. The valve body storage portion 41b has a valve body space S that stores the valve body 42. The valve body storage portion 41b has an inflow flow path IN through which cooling water flows into the valve body space S. Further, the valve body storage portion 41b has an accommodation recessed portion 41d for accommodating a portion of the buffer member 45 on the F2 direction side. The accommodation recessed portion 41d is formed by depressing the end face of the valve body storage portion 41b in the F2 direction side toward the F1 direction. The accommodation recessed portion 41d is formed in an annular shape on the end face on the F2 direction side of the valve body storage portion 41b. The outflow-side connecting portion 41c is connected to a flow path through which cooling water flows in the heater core 5.

The valve main body 41 includes a circulation hole 41e and a yoke 41f.

The circulation hole 41e penetrates the valve main body 41 in the direction F. The circulation hole 41e extends along a central axis line C parallel to the F direction. The cooling water flowing out of the flow path in the engine 11 flows through the circulation hole 41e. The circulation hole 41e has the inflow flow path IN and the valve body space S as a part.

The yoke 41f has a valve seat 41h provided in the circulation hole 41e and has magnetism. The yoke 41f is formed of a magnetic body such as iron. The yoke 41f is electrically connected to the solenoid 44. The yoke 41f has a seating portion 41g provided at a portion facing a surface 42b of the valve body 42 on the F2 direction side. The seating portion 41g is disposed around the front edge part of the inflow flow path IN of the valve body storage portion 41b on the F1 direction side. That is, the seating portion 41g is formed in a substantially annular shape (see Fig. 3A) when viewed from the F1 direction. The valve seat 41h is a surface of the seating portion 41g on the F1 direction side (valve body 42 side). In the present disclosure, the feature according to which a component « has magnetism » is to be understood that said component is at least partially or totally made of a magnetic material.

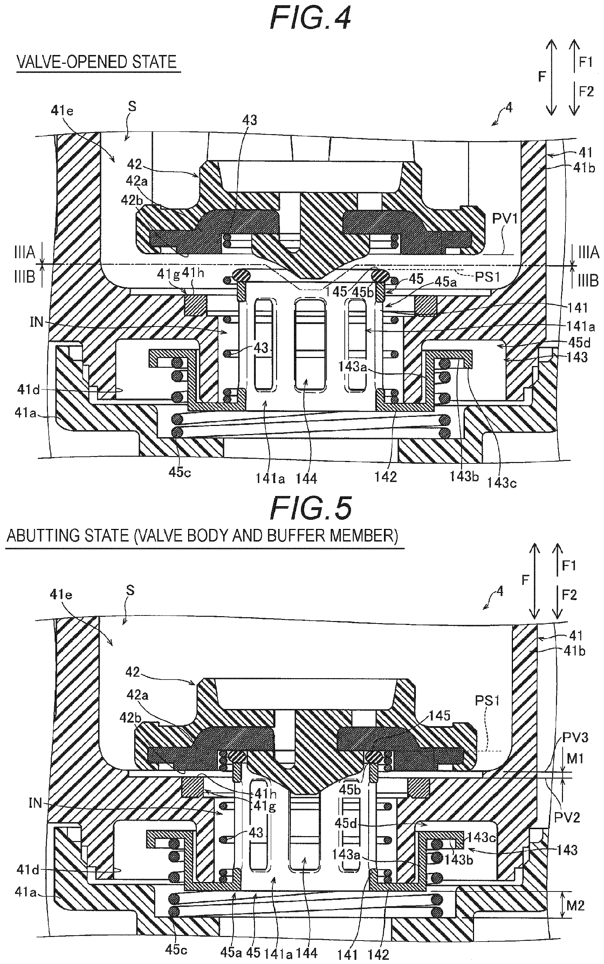

As shown in Fig. 4, the valve body 42 is formed in a substantially annular shape (see Fig. 3B) when viewed from the direction F2. The valve body 42 is formed smaller than the valve body space S in a direction orthogonal to the F direction. Further, the valve body 42 is formed larger in the direction orthogonal to the F direction than the inflow flow path IN through which the cooling water flows into the valve body space S. The valve body 42 is configured to be movable in the F direction in the valve body space S of the valve body storage portion 41b.

Specifically, the valve body 42 abuts on the valve seat 41h when the valve body is seated, and separates from the valve seat 41h when the valve is opened, thereby controlling the flow of the cooling water flowing out of the circulation hole 41e, and has magnetism. That is, the valve body 42 is configured to abut on the valve seat 41h by moving in the F2 direction and to seat on the valve seat 41h, thereby maintaining the fluid control valve 4 in the valve-closed state. The valve body 42 is configured to open the fluid control valve 4 by moving away from the valve seat 41h by moving in the F1 direction. Here, the fluid control valve 4 is in the valve-closed state by moving the valve body 42 in the F2 direction, so that the F2 direction is the valve closing direction. Since the fluid control valve 4 is in the valve-opened state by moving the valve body 42 in the F1 direction, the F1 direction is the valve opening direction.

The valve body 42 has a magnetic body portion 42a. The magnetic body portion 42a is formed of a magnetic body such as iron. The magnetic body portion 42a is provided on the surface 42b of the valve body 42 on the F2 direction side. The magnetic body portion 42a is formed in a substantially annular shape (see Fig. 3B) when viewed from the F2 direction. When the valve body 42 is seated, the surface 42b of the magnetic body portion 42a on the F2 direction side (the seating portion 41g side) is in face contact with the valve seat 41h of the seating portion 41g of the yoke 41f.

The valve opening urging member 43 is disposed at a portion of the circulation hole 41e corresponding to a support portion 45a described later, and urges the valve body 42 in the F1 direction (valve opening side). The valve opening urging member 43 is formed by a coil spring. The end portion of the valve opening urging member 43 on the F1 direction side is abutting on the magnetic body portion 42a of the valve body 42. An end portion of the valve opening urging member 43 on the F2 direction side is abutting on an inner storage portion 142 of the buffer member 45 described later.

As shown in Fig. 2, the solenoid 44 is configured to generate a magnetic field in the yoke 41f by passing a current through the yoke 41f. The solenoid 44 has a core 44a, a bobbin 44b, and an electromagnetic coil 44c. The core 44a is formed of a magnetic body such as iron and has an axial shape. The core 44a is attached inside the bobbin 44b. The bobbin 44b is formed of a non-magnetic body such as a resin. The electromagnetic coil 44c is configured by an insulated conductor wound around the bobbin 44b. The electromagnetic coil 44c is configured to generate a magnetic field in the valve main body 41 and attract the valve body 42 to the valve seat 41h. That is, the electromagnetic coil 44c is configured to flow a current for generating a magnetic field through the valve main body 41. The core 44a, the bobbin 44b, and the electromagnetic coil 44c are provided on the valve main body 41.

Here, the valve body 42 is attracted to the valve seat 41h of the yoke 41f by the magnetic force between the yoke 41f and the magnetic body portion 42a caused by causing a current to flow through the electromagnetic coil 44c to generate a magnetic field in the yoke 41f. At this time, the valve body 42 moves in the F2 direction from a valve opening position PV1 (see Fig. 4) to a seating position PV2 (see Fig. 5) at which the magnetic body portion 42a of the valve body 42 sits (abuts) on the valve seat 41h of the yoke 41f. Then, the state in which the valve body 42 is seated on the valve seat 41h of the yoke 41f is maintained by the magnetic force between the yoke 41f and the magnetic body portion 42a caused by the current flowing through the electromagnetic coil 44c and continuously generating the magnetic field in the yoke 41f. Further, the valve body 42 is moved in the F1 direction by the urging force of the valve opening urging member 43 by stopping the current flowing through the electromagnetic coil 44c and stopping the generation of the magnetic field in the yoke 41f. That is, the valve body 42 moves away from the valve seat 41h of the yoke 41f from the seating position PV2 (see Fig. 5) to the valve opening position PV1 (see Fig. 4). Then, the state in which the valve body 42 is disposed at the valve opening position PV1 (see Fig. 4) by the urging force of the valve opening urging member 43 is maintained. The urging force of the valve opening urging member 43 is smaller than the attraction force of the yoke 41f by the electromagnetic coil 44c against the valve body 42.

### Buffer Member

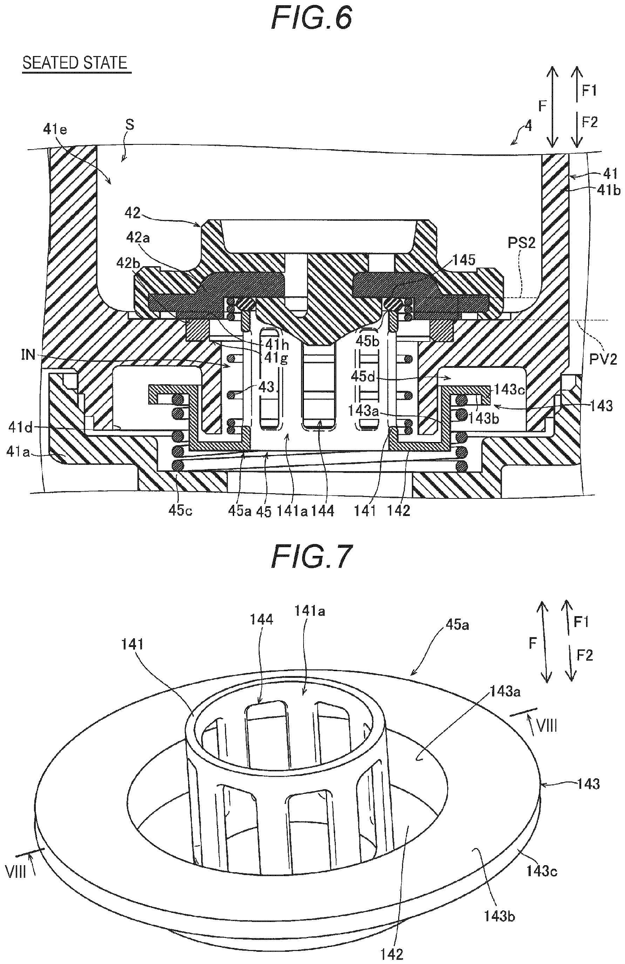

As shown in Figs. 5 and 6, the buffer member 45 of the first embodiment reduces the moving speed of the valve body 42 while moving integrally with the valve body 42 while the valve body 42 moves from a predetermined position PV3 near the seating position PV2 to the seating position PV2 in the F2 direction. More specifically, the buffer member 45 is configured such that, after the buffer member abutting on the valve body 42, an abutting portion on the valve body 42 (distal end portion 145 described later) is movable from an abutting position PS1 (see Fig. 5) on the valve body 42 to a seating corresponding position PS2 (see Fig. 6) corresponding to the position (seating position PV2) at which the valve body 42 abuts and seats on the valve seat 41h. At this time, the buffer member 45 is configured to abut on the valve body 42 that moves in the F2 direction (the valve closing direction) after the valve closing operation is started and before seating, to reduce the moving speed of the valve body 42.

The predetermined position PV3 near the seating position PV2 indicates the position of the end portion of the magnetic body portion 42a of the valve body 42 in the direction F2 when the buffer member 45 and the valve body 42 abut on each other. The abutting position PS1 indicates the position of the end portion (distal end portion 145) on the F1 direction side of the buffer member 45 when the buffer member 45 and the valve body 42 abut on each other. The seating corresponding position PS2 indicates the position of the end portion (distal end portion 145) on the F1 direction side of the buffer member 45 when the valve body 42 is seated. The predetermined position PV3 is a position on the F1 direction side from the seating position PV2 and a position on the F2 direction side from the center between the valve opening position PV1 and the seating position PV2.

Specifically, the buffer member 45 has the support portion 45a, an elastic member 45b, and a supporting urging member 45c (example of "first urging member" in the appended claims).

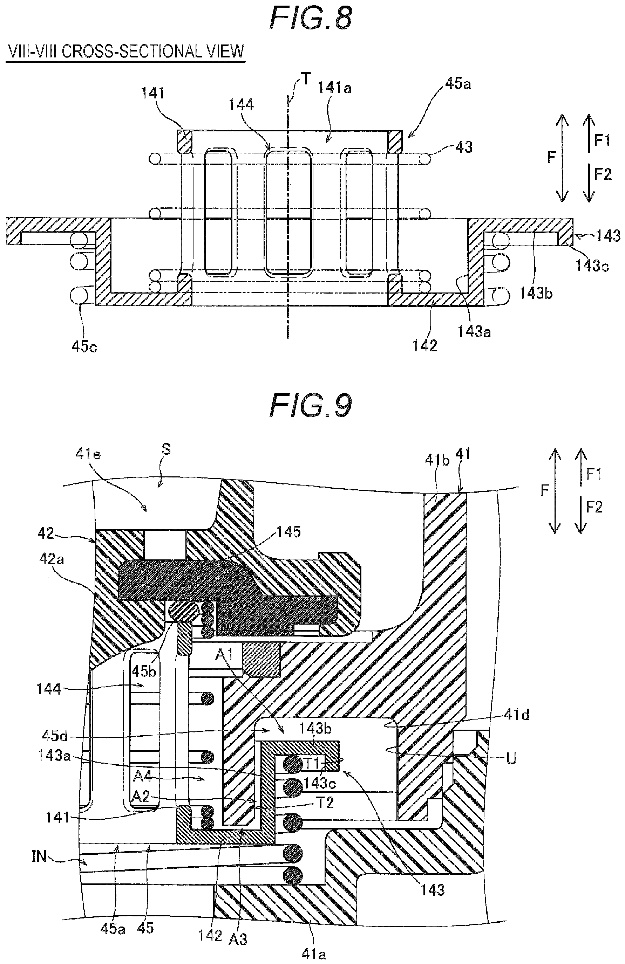

As shown in Figs. 7 and 8, the support portion 45a is formed in a substantially annular shape when viewed from the F1 direction. The support portion 45a is formed of metal. Here, the support portion 45a has a cylindrical portion 141, the inner storage portion 142, an outer storage portion 143 (example of "first storage portion" in the appended claims), and an outflow hole 144.

The cylindrical portion 141 is formed in a cylindrical shape extending in the F direction. A hole for circulation 141a is formed in the cylindrical portion 141 as a through hole penetrating in the F direction. The hole for circulation 141a is configured as a part of the circulation hole 41e. Further, the cylindrical portion 141 is disposed in the circulation hole 41e. The cylindrical portion 141 is disposed on the inside (on the side of the central axis line C2) the valve seat 41h in a direction orthogonal to the F direction.

The inner storage portion 142 is configured to hold the valve opening urging member 43. Specifically, the inner storage portion 142 is configured as a receiving portion for the valve opening urging member 43. That is, the inner storage portion 142 is configured to store the valve opening urging member 43. Here, the inner storage portion 142 is provided on the outer peripheral portion of the portion (cylindrical portion 141) disposed in the circulation hole 41e of the support portion 45a. That is, the inner storage portion 142 is provided at the end portion on the F2 direction side of the outer peripheral surface of the cylindrical portion 141. The inner storage portion 142 extends from the end portion of the cylindrical portion 141 on the F2 direction side in a direction orthogonal to the F direction. The valve opening urging member 43 held by the inner storage portion 142 is guided by the cylindrical portion 141 so as to expand and contract in the F direction.

The outer storage portion 143 is configured to hold the supporting urging member 45c. Specifically, the outer storage portion 143 is configured as a receiving portion of the valve opening urging member 43. The outer storage portion 143 is disposed outside the inner storage portion 142 (opposite to the central axis line C2 side) in a direction orthogonal to the F direction. Here, the outer storage portion 143 is provided outside the circulation hole 41e and inside the valve main body 41 in a direction orthogonal to the F direction (valve closing direction). Further, the outer storage portion 143 stores the supporting urging member 45c.

The outer storage portion 143 has an inner peripheral portion 143a, a connecting portion 143b, and an outer peripheral portion 143c. The inner peripheral portion 143a extends from the end portion of the inner storage portion 142 in a direction orthogonal to the F direction toward the F1 direction. The connecting portion 143b connects an end portion of the inner peripheral portion 143a on the F1 direction side and an end portion of the outer peripheral portion 143c on the F1 direction side. The connecting portion 143b extends from an end portion on the F1 direction side of the inner peripheral portion 143a in a direction orthogonal to the F direction. The outer peripheral portion 143c extends from the end portion of the connecting portion 143b in a direction orthogonal to the F direction toward the F2 direction. The length of the outer peripheral portion 143c is shorter than the length of the inner peripheral portion 143a in the F direction. The supporting urging member 45c held by the outer storage portion 143 is guided by the inner peripheral portion 143a so as to expand and contract in the F direction.

The outflow hole 144 penetrates the cylindrical portion 141 in a direction orthogonal to the F2 direction, and is configured to allow the cooling water in the hole for circulation 141a to flow out of the cylindrical portion 141. That is, the outflow hole 144 makes the hole for circulation 141a communicate with the inflow flow path IN (see Fig. 6). Specifically, the outflow hole 144 has a substantially rectangular shape when viewed from a direction orthogonal to the F direction. The outflow hole 144 is formed in a long hole shape extending in the F direction.

The outflow hole 144 is configured to have a flow path resistance smaller than a flow path resistance in a second flow path A2 (see Fig. 9) which is a minute gap to be described later. Specifically, the area of the outflow hole 144 viewed from a direction orthogonal to the direction F has a larger area than the area of the second flow path A2 viewed from the direction F1. In the F direction, the length of the outflow hole 144 is preferably equal to or more than half the length of the cylindrical portion 141 and less than the length of the cylindrical portion 141. In the circumferential direction around a central axis line T of the hole for circulation 141a, it is preferable that the length of the outflow hole 144 is equal to or longer than the 1/16 of the circumference of the cylindrical portion 141 and is equal to or shorter than 1/8 of the circumference of the cylindrical portion 141.

A plurality (eight) of outflow holes 144 are formed in the cylindrical portion 141. The plurality of outflow holes 144 are formed in substantially the same shape. The plurality of outflow holes 144 are arranged at equal angular intervals in the circumferential direction around the central axis line T of the hole for circulation 141a. That is, the plurality of outflow holes 144 are disposed at approximately 45-degree intervals in the circumferential direction around the central axis line T of the hole for circulation 141a.

As shown in Fig. 5, the distal end portion 145 of the buffer member 45 on the F1 direction side (valve body 42 side) is formed of a material that can be elastically deformed, such as an elastomer or rubber. Specifically, the elastic member 45b is provided at an end portion of the cylindrical portion 141 of the support portion 45a on the F1 direction side. That is, the elastic member 45b has the distal end portion 145 on the F1 direction side of the buffer member 45.

The elastic member 45b is configured to reduce the collision at the abutting position PS1 between the magnetic body portion 42a of the valve body 42 and the support portion 45a. That is, the elastic member 45b is configured to absorb the impact at the time of contact between the valve body 42 and the support portion 45a attracted to the valve seat 41 h of the yoke 41f by causing a current to flow through the electromagnetic coil 44c to generate a magnetic field at the yoke 41f.

Specifically, the elastic member 45b is formed of a rubber material. The elastic member 45b is provided over the entire end portion (the entire circumference) of the end portion on the F1 direction side of the cylindrical portion 141 of the support portion 45a. Further, the elastic member 45b is disposed inside the valve seat 41h in a direction orthogonal to the F direction. That is, the elastic member 45b is disposed at a position abutting on a portion of the surface 42b of the magnetic body portion 42a of the valve body 42 on the F2 direction side that is inside the portion that abutting on the valve seat 41h in a direction orthogonal to the F direction. As described above, the elastic member 45b as the distal end portion 145 of the buffer member 45 is disposed inside the valve seat 41h.

As shown in Fig. 4, the supporting urging member 45c urges the support portion 45a in the F1 direction (valve opening side). More specifically, the supporting urging member 45c is disposed in the accommodation recessed portion 41d of the valve body storage portion 41b, and urges the support portion 45a in the F1 direction. The supporting urging member 45c is formed by a coil spring. The end portion of the supporting urging member 45c on the F1 direction side is abutting on the connecting portion 143b of the outer storage portion 143 of the support portion 45a. The end portion on the F2 direction side of the supporting urging member 45c is abutting on the end face on the F1 direction side of the inflow-side connecting portion 41a.

The supporting urging member 45c has a function of positioning the support portion 45a when the valve is opened. That is, the supporting urging member 45c positions the distal end position of the buffer member 45 in the F1 direction at the time of opening the valve to the abutting position PS1 (see Fig. 4). As described above, when the valve is opened, the distal end portion 145 of the buffer member 45 on the F1 direction side (valve body 42 side) is disposed away from the valve body 42 between the valve body 42 and the valve seat 41h (abutting position PS1).

As shown in Figs. 5 and 6, the buffer member 45 is configured such that the distal end portion 145 as the abutting portion is movable from a position separated from the valve body 42 as an abutting position PS1 on the valve body 42 to the seating corresponding position PS2 after the valve closing operation is started. That is, the buffer member 45 is configured to be movable by the same distance as a movement distance M1 in the F2 direction of the valve body 42 from the predetermined position PV3 to the seating position PV2 during the valve closing operation. Specifically, the buffer member 45 is configured to be able to move a movement distance M2 that is equal to or longer than the movement distance M1.

Here, the movement distance M2 indicates a distance from the position of the end portion the F2 direction side of the inner storage portion 142 of the buffer member 45 to the position where the supporting urging member 45c abuts on the end face on the F1 direction side of the inflow-side connecting portion 41a when the distal end portion 145 of the buffer member 45 is disposed at the abutting position PS1.

The buffer member 45 is configured to maintain the state in which the distal end portion 145 of the buffer member 45 is abutting on the end face on the F2 direction side of the valve body 42 when the buffer member 45 moves the movement distance M1 together with the valve body 42. That is, the buffer member 45 is configured such that the distal end portion 145 is integrally movable with the valve body 42 from the abutting position PS1 on the valve body 42 to the seating corresponding position PS2. At this time, in the fluid control valve 4, the hole for circulation 141a is closed by the valve body 42.

The abutting portion (distal end portion 145) of the valve body 42 on the buffer member 45 at the abutting position PS1 and the abutting portion of the valve body 42 on the valve seat 41h at the seating position PV2 are different in a direction orthogonal to the F direction. Specifically, the distal end portion 145 of the buffer member 45 is configured to abut on a portion of the surface 42b on the F2 direction side (valve seat 41h side) of the valve body 42, which is inside the valve seat 41h from the abutting position PS1 on the valve body 42 to the seating corresponding position PS2 after the valve closing operation is started. The valve seat 41h is configured to abut on a portion of the surface 42b on the F2 direction side (valve seat 41h side) of the valve body 42 at the seating position PV2, which is outside the distal end portion 145 of the buffer member 45.

The buffer member 45 is configured to reduce the moving speed of the valve body 42 by both the urging force of the supporting urging member 45c and the flow path resistance of the flow path formed by the support portion 45a.

Specifically, when the buffer member 45 moves from the abutting position PS1 to the seating corresponding position PS2 after the valve closing operation is started, the support portion 45a is urged by the supporting urging member 45c to reduce the moving speed of the valve body 42 in the F2 direction. In other words, from the abutting position PS1 to the seating corresponding position PS2, the support portion 45a and the valve body 42 move integrally in the F2 direction while being braked by the urging force of the supporting urging member 45c in the F1 direction.

As shown in Fig. 9, after the valve closing operation is started, the support portion 45a is configured to reduce the moving speed of the valve body 42 in the F2 direction when the buffer member 45 moves from the abutting position PS1 to the seating corresponding position PS2 by narrowing a part of the flow path width of the flow path formed by the support portion 45a. That is, by using the flow path resistance of the flow path formed by the support portion 45a as a viscous damper, the support portion 45a is configured to reduce the moving speed of the valve body 42 in the valve closing direction when the buffer member 45 moves from the abutting position PS1 to the seating corresponding position PS2 after the valve closing operation is started.

Specifically, between the support portion 45a and an inner peripheral surface U of the valve body storage portion 41b of the valve main body 41, after the buffer member 45 and the valve body 42 abut on each other and before being seated, a bypass flow path 45d different from the hole for circulation 141a is formed.

The bypass flow path 45d has first to fourth flow paths A1 to A4. The first flow path A1 is a flow path between the face on the F1 direction side of the connecting portion 143b of the outer storage portion 143 and the inner peripheral surface U of the valve body storage portion 41b in the F direction. The second flow path A2 is a flow path between an inner peripheral surface T2 of the inner peripheral portion 143a of the outer storage portion 143 and the inner peripheral surface U of the valve body storage portion 41b in a direction orthogonal to the F direction. The third flow path A3 is a flow path between the face on the F1 direction side of the inner storage portion 142 and the inner peripheral surface U of the valve body storage portion 41b in the F direction. The fourth flow path A4 is a flow path between the outer peripheral surface of the cylindrical portion 141 and the inner peripheral surface U of the valve body storage portion 41b in a direction orthogonal to the F direction.

The flow path width of the second flow path A2 is smaller than the other flow path widths (first, third and fourth flow paths A1, A3, and A4). Here, the flow path width of the second flow path A2 is a minute gap. As described above, in the direction orthogonal to the F2 direction, a minute gap through which the cooling water can flow is formed between the inner peripheral surface T2 of the outer storage portion 143 and the inner peripheral surface U of the valve body storage portion 41b.

The first flow path A1 and the third flow path A3 maintain a substantially constant flow path width between the buffer member 45 and the valve body 42 and after abutting on each other and before being seated. That is, from the abutting position PS1 to the seating corresponding position PS2, the support portion 45a and the valve body 42 move integrally in the F2 direction while being braked by the flow path resistance to the cooling water flowing through the first flow path A1 and the third flow path A3.

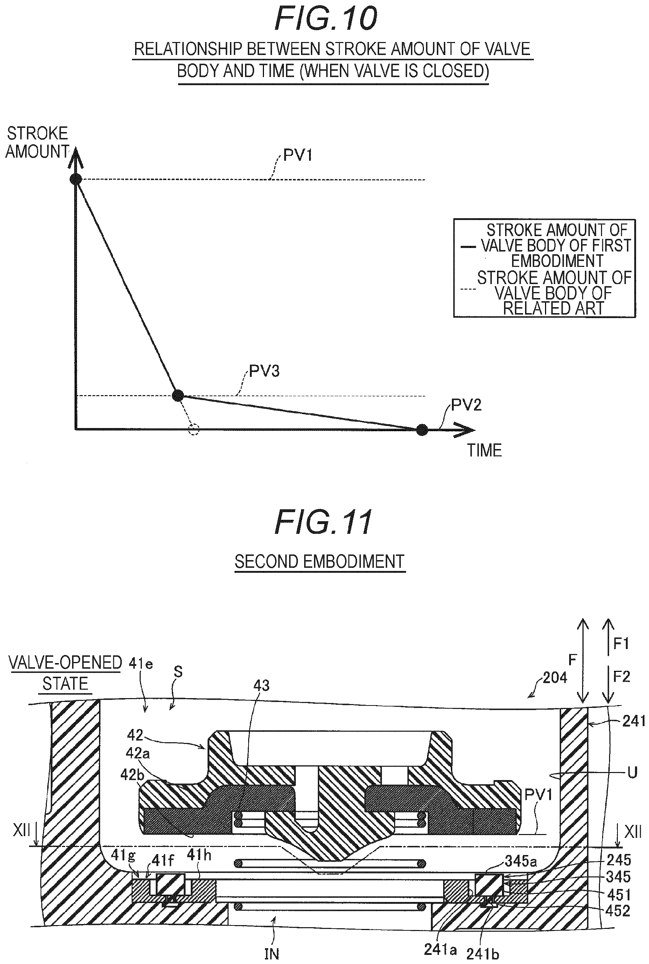

Here, Fig. 10 shows the relationship between the stroke amount (movement amount) of the valve body 42 and time when the valve body 42 moves from the valve opening position PV1 to the seating position PV2 passing through the predetermined position PV3 abutting on the distal end portion 145 of the buffer member 45. The stroke amount of the valve body 42 indicates a distance from the seating position PV2 when the valve body 42 moves in the F1 direction side from the sitting position PV2 with reference to the sitting position PV2. In Fig. 10, the relationship between the stroke amount and the time of the valve body 42 of the first embodiment is indicated by a solid line, and the stroke amount and the time of the valve body of the related art (that is, the valve body without the buffer member 45) is indicated by a broken line. In Fig. 10, each inclination of the solid line and the broken line is the moving speed of the valve body 42.

The valve body 42 is attracted by the magnetic force between the valve seat 41h of the yoke 41f and the magnetic body portion 42a of the valve body 42 from the valve opening position PV1 to the predetermined position PV3, and moves in the direction F2. The valve body 42 moves in a state in the F2 direction from the predetermined position PV3 to the seating position PV2 while being braked by the urging force of the supporting urging member 45c and the flow path resistance of the bypass flow path 45d. Here, the stroke amount of the valve body 42 from the predetermined position PV3 to the seating position PV2 is smaller than the stroke amount of the valve body 42 from the valve opening position PV1 to the predetermined position PV3. In addition, the moving speed of the valve body 42 from the predetermined position PV3 to the seating position PV2 is lower than the moving speed of the valve body 42 from the valve opening position PV1 to the predetermined position PV3. Further, the moving time of the valve body 42 from the predetermined position PV3 to the seating position PV2 is longer than the moving time of the valve body 42 from the valve opening position PV1 to the predetermined position PV3.

Thus, in the fluid control valve 4, similarly to the valve body of the related art, the valve body 42 is moved without braking to the vicinity of the seating position PV2. However, in the fluid control valve 4, unlike the valve body of the related art, the moving speed of the valve body 42 is reduced by performing braking near the seating position PV2. As a result, in the fluid control valve 4, it can be seen that both minimizing the moving time of the valve body 42 from the valve opening position PV1 to the seating position PV2 and reducing the moving speed of the valve body 42 from the predetermined position PV3 to the seating position PV2 as much as possible are achieved. In the fluid control valve 4, the magnetic body portion 42a of the valve body 42 and the valve seat 41h are brought into face contact at the seating position PV2.

### Effect of First Embodiment

In the first embodiment, the following effects can be obtained.

In the first embodiment, as described above, after the valve closing operation is started and before the valve body is seated, the fluid control valve 4 is provided with the buffer member 45 that abuts on the valve body 42 moving in the F2 direction to reduce the moving speed of the valve body 42. Then, the buffer member 45 is configured such that, after the buffer member abuts on the valve body 42, an abutting portion on the valve body 42 (distal end portion 145) is movable from the abutting position PS1 on the valve body 42 to the seating corresponding position PS2 corresponding to the seating position PV2 at which the valve body 42 abuts and seats on the valve seat 41h. This allows the abutting portion of the buffer member 45 to move together with the valve body 42 until the seating position PV2 is reached, so that the valve body 42 can be securely seated on the valve seat 41h, and the generation of a gap between the valve seat 41h of the yoke 41f and the valve body 42 can be suppressed even when the buffer member 45 is provided. In addition, since the moving speed of the valve body 42 can be reduced by the buffer member 45 until the valve body 42 reaches the seating position PV2, the collision sound between the valve body 42 and the valve seat 41h can be reduced. As a result, the magnetic resistance caused by the gap between the valve seat 41h of the yoke 41f and the valve body 42 can be substantially eliminated, and a sufficient valve closing holding force for maintaining the valve-closed state can be generated, and the collision sound between the valve body 42 and the valve seat 41h can be reduced. In addition, since the moving speed of the valve body 42 can be reduced by the buffer member 45 until the valve body 42 reaches the seating position PV2, the load applied to both the valve body 42 and the valve seat 41h at the time of collision can be reduced. As a result, it is only necessary to perform a plating process for general corrosion prevention without performing a plating process for adding wear resistance to the valve body 42 and the valve seat 41h, the plating process of the fluid control valve 4 can be simplified.

In the first embodiment, as described above, the buffer member 45 is configured such that the distal end portion 145 as the abutting portion is movable from a position separated from the valve body 42 as the abutting position PS1 on the valve body 42 to the seating corresponding position PS2 after the valve closing operation is started. As a result, as compared with the case where the moving speed of the valve body 42 is reduced by abutting on the valve body 42 from the time of valve opening, the distance for reducing the moving speed of the valve body 42 can be reduced by abutting the distal end portion 145 of the buffer member 45 on the valve body 42, and thereby the time required for the valve body 42 to be seated on the valve seat 41h can be shortened.

In the first embodiment, as described above, the distal end portion 145 of the buffer member 45 on the valve body 42 side is formed of a material that can be elastically deformed. Accordingly, not only the collision sound when the valve body 42 is seated on the valve seat 41h but also the collision sound when the valve body 42 abuts on the distal end portion 145 of the buffer member 45 can be reduced and can more reliably suppress the generation of sound caused by the fluid control valve 4.

In the first embodiment, as described above, after starting the valve closing operation, the distal end portion 145 of the buffer member 45 is configured to abut on a portion of the surface 42b on the valve seat 41h side of the valve body 42 which is inside the valve seat 41h from the abutting position PS1 on the valve body 42 to the seating corresponding position PS2. The valve seat 41h is configured to abut on a portion of the surface 42b on the valve seat 41h side of the valve body 42 at the seating position PV2, which is outside the distal end portion 145 of the buffer member 45. Thus, since the size of the distal end portion 145 of the buffer member 45 can be limited in the direction orthogonal to the F2 direction, as compared with the case where the distal end portion 145 of the buffer member 45 is provided outside the valve seat 41h, an increase in the size of the buffer member 45 can be suppressed. Further, as compared with the case where the portion of the surface 42b on the valve seat 41h side of the valve body 42 at the seating position PV2 on which the valve seat 41h abuts is provided inside the distal end portion 145 of the buffer member 45, since the size of the valve seat 41h can be prevented from being limited in the direction orthogonal to the F2 direction, a larger magnetic force can be generated between the valve seat 41h and the valve body 42 by providing the valve seat 41h large. As a result, it is possible to suppress an increase in the size of the fluid control valve 4 and to generate a sufficient valve closing holding force to maintain the valve-closed state.

In the first embodiment, as described above, when the buffer member 45 moves from the abutting position PS1 to the seating corresponding position PS2 after the valve closing operation is started, the support portion 45a is urged by the supporting urging member 45c to reduce the moving speed of the valve body 42 in the F2 direction. Accordingly, the moving speed of the valve body 42 can be reduced only by urging the support portion 45a in the F1 direction by the supporting urging member 42c, so that the moving speed of the valve body 42 can be reduced by a simple structure.

In the first embodiment, the support portion 45a is provided with the cylindrical portion 141 in which the hole for circulation 141a penetrating in the F2 direction is formed as a part of the circulation hole 41e. Then, an outflow hole 144 that penetrates the cylindrical portion 141 in a direction orthogonal to the F2 direction and allows the cooling water in the hole for circulation 141a to flow out of the cylindrical portion 141 is formed. As a result, the cooling water flowing into the hole for circulation 141a in the cylindrical portion 141 can flow out of the cylindrical portion 141 from the hole for circulation 141a as well as the outflow hole 144. Therefore, the flow of the cooling water flowing out of the cylindrical portion 141 can be made smoother. As a result, even when the valve body 42 and the support portion 45a are abutting on each other and the valve body 42 and the support portion 45a move in the F2 direction, the valve body 42 and the support portion 45a can be moved in the F2 direction in the state in which the flow of the cooling water flowing out of the cylindrical portion 141 is made smoother, so that the valve body 42 and the support portion 45a can be moved smoothly in the F2 direction.

### Second Embodiment

Next, the configuration of a fluid control valve 204 according to the second embodiment disclosed here will be described with reference to Figs. 11 to 14. In the second embodiment, unlike the first embodiment in which the fluid control valve 4 includes the buffer member 45 provided with the support portion 45a, an example of the fluid control valve 204 including a buffer member 245 provided by a foamed rubber member 345 will be described. In the second embodiment, the same components as those in the first embodiment are denoted by the same reference numerals, and description thereof is omitted.

As shown in Fig. 11, the fluid control valve 204 of the second embodiment is configured to switch between the flow of the cooling water and the stop of the flow of the cooling water. Specifically, the fluid control valve 204 includes a valve main body 241, the valve body 42, the valve opening urging member 43, the solenoid 44 (see Fig. 1), and the buffer member 245. Here, the flow direction of the cooling water is defined as the F1 direction, the direction opposite to the F1 direction is defined as the F2 direction, and the F1 direction and the F2 direction are defined as the F direction.

The valve main body 241 includes the circulation hole 41e and the yoke 41f. The valve main body 241 includes an accommodation recessed portion 241a that is depressed in the F2 direction and stores a foamed rubber member 345 described later when the valve body is seated. More specifically, the accommodation recessed portion 241a is formed by depressing the face of the seating portion 41g on the F1 direction side in the F2 direction. In addition, a retaining hole 241b is formed in the valve main body 241 so that the foamed rubber member 345, which will be described later, is attached in a state positioned in the accommodation recessed portion 241a. Specifically, the retaining hole 241b is formed by penetrating the yoke 41f and depressing the inner peripheral surface U of the valve body storage portion 41b of the valve main body 241.

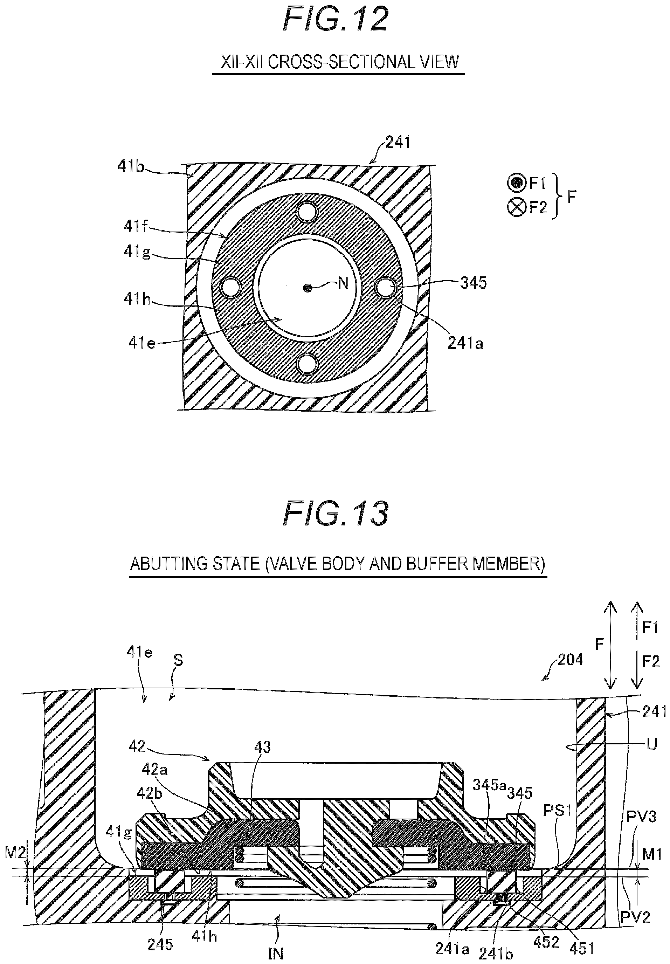

As shown in Fig. 12, a plurality (four) of the accommodation recessed portions 241a are provided around a central axis line N of the circulation hole 41e extending in the F direction. Although not shown, the retaining hole 241b is formed in accordance with the position of the accommodation recessed portion 241a.

### Buffer Member

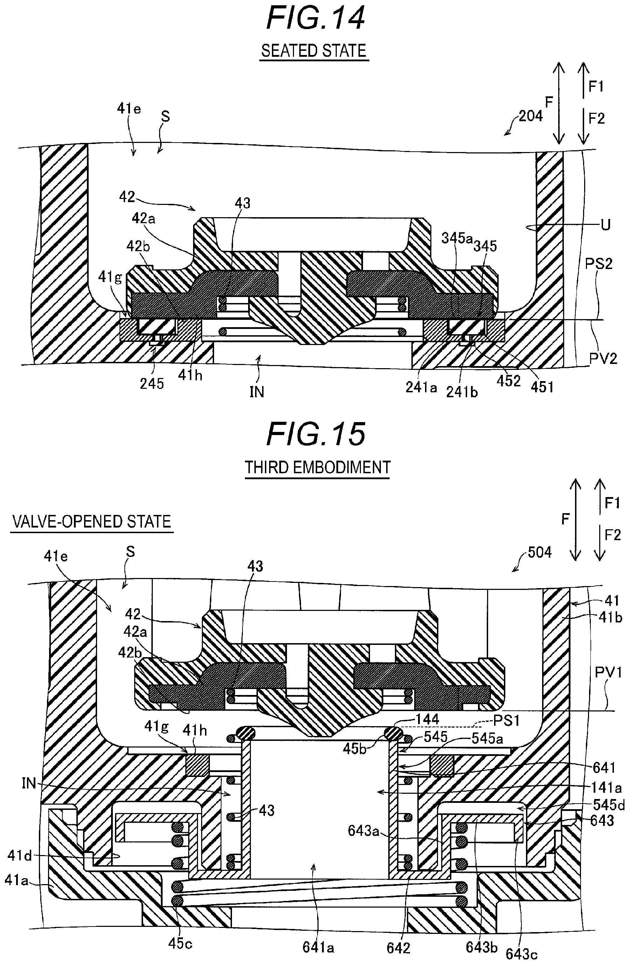

As shown in Figs. 13 and 14, while the valve body 42 moves from the predetermined position PV3 of the seating position PV2 to the seating position PV2 in the F2 direction, the buffer member 245 is configured to reduce the moving speed of the valve body 42 while moving integrally with the valve body 42. Specifically, the buffer member 245 of the second embodiment includes the foamed rubber member 345 which causes the distal end portion 345a, which is an abutting portion, to abut on the surface 42b of the valve body 42 on the valve seat 41h side from the abutting position PS1 on the valve body 42 to the seating corresponding position PS2 after the start of the valve closing operation, and absorbs and reduces the moving speed associated with the movement of the valve body 42 in the F2 direction.

The foamed rubber member 345 is formed of an elastically deformable material such as an elastomer. The foamed rubber member 345 is configured to reduce the impact at the time of collision at the abutting position PS1 with the magnetic body portion 42a of the valve body 42. The foamed rubber member 345 is configured to reduce an impact at the time of collision at the seating position PV2 between the magnetic body portion 42a of the valve body 42 and the valve seat 41h.

Specifically, the foamed rubber member 345 has a receiving portion 451 and a retaining portion 452.

The receiving portion 451 is configured to protrude further in the F1 direction than the accommodation recessed portion 241a at the time of valve opening and abutting. Specifically, the receiving portion 451 expands by absorbing surrounding cooling water at the time of valve opening and abutting. The receiving portion 451 is configured to be stored in the accommodation recessed portion 241a when seated. More specifically, the receiving portion 451 is contracted in the F2 direction by discharging the cooling water to the surroundings by being crushed into the accommodation recessed portion 241a by the valve body 42 when seated.

The retaining portion 452 is configured to be fitted into the retaining hole 241b. The retaining portion 452 protrudes from the face of the receiving portion 451 on the F2 direction side toward the F2 direction. The retaining portion 452 is formed according to the shape of the retaining hole 241b. The foamed rubber member 345 is attached to the accommodation recessed portion 241a by a retaining portion 452. The foamed rubber member 345 is attached in a state where it is positioned at the center position of the accommodation recessed portion 241a in the direction orthogonal to the F direction by the retaining portion 452.

As described above, the foamed rubber member 345 absorbs the load caused by the collision with the magnetic body portion 42a of the valve body 42 by elastically deforming it. In addition, the foamed rubber member 345 brakes the movement of the valve body 42 in the F2 direction by discharging the internal cooling water and elastically deforming. Further, the foamed rubber member 345 makes the magnetic body portion 42a of the valve body 42 and the valve seat 41h abut on each other (face contact) by being squeezed into the accommodation recessed portion 241a when seated. The other configuration of the second embodiment is the same as the configuration of the first embodiment.

### Effect of Second Embodiment

In the second embodiment, the following effects can be obtained.

In the second embodiment, as described above, after the valve closing operation is started and before the fluid control valve 204 is seated, the fluid control valve 204 is provided with the buffer member 245 that abuts on the valve body 42 moving in the F2 direction to reduce the moving speed of the valve body 42. Then, the buffer member 245 is configured such that, after the buffer member abuts on the valve body 42, an abutting portion (distal end portion 345a) on the valve body 42 is movable from the abutting position PS1 on the valve body 42 to the seating corresponding position PS2 corresponding to the seating position PV2 at which the valve body 42 abuts and seats on the valve seat 41h. Thus, it is possible to reduce the collision sound between the valve body 42 and the valve seat 41h while generating a sufficient valve closing holding force for maintaining the valve-closed state.

In the second embodiment, as described above, the buffer member 245 includes the foamed rubber member 345 which causes the distal end portion 345a to abut on the surface 42b of the valve body 42 on the valve seat 41h side from the abutting position PS1 on the valve body 42 to the seating corresponding position PS2 after the start of the valve closing operation, and absorbs and reduces the moving speed associated with the movement of the valve body 42 in the F2 direction. An accommodation recessed portion 241a is formed in the valve main body 241 depressed toward the F2 direction to store the foamed rubber member 345 when the valve body is seated. Thus, since it is possible to reduce the moving speed of the valve body 42, reduce the collision sound when the valve body 42 is seated on the valve seat 41h, cause the valve body 42 to abut on the distal end portion 345a of the buffer member 245, and reduce the collision sound, only with the foamed rubber member 345, the buffer member 245 can have a simple structure. The other effects of the second embodiment are the same as the effects of the first embodiment.

### Third Embodiment

Next, a configuration of a fluid control valve 304 according to a third embodiment disclosed here will be described with reference to Figs. 15 to 18. In the third embodiment, unlike the first embodiment in which the buffer member 45 in which the outflow hole 144 is formed in the cylindrical portion 141 is provided, an example in which a buffer member 545 in which the outflow hole is not formed in the cylindrical portion 641 is provided will be described. In the third embodiment, the same components as those in the first embodiment are denoted by the same reference numerals, and description thereof is omitted.

As shown in Fig. 15, the fluid control valve 504 of the third embodiment is configured to switch between the flow of the cooling water and the stop of the flow of the cooling water. Specifically, the fluid control valve 504 includes the valve main body 41, the valve body 42, the valve opening urging member 43, the solenoid 44 (see Fig. 1), and the buffer member 545. Here, the flow direction of the cooling water is defined as the F1 direction, the direction opposite to the F1 direction is defined as the F2 direction, and the F1 direction and the F2 direction are defined as the F direction.

### Buffer Member

The buffer member 545 has the support portion 545a, an elastic member 45b, and a supporting urging member 45c (example of "first urging member" in the appended claims).

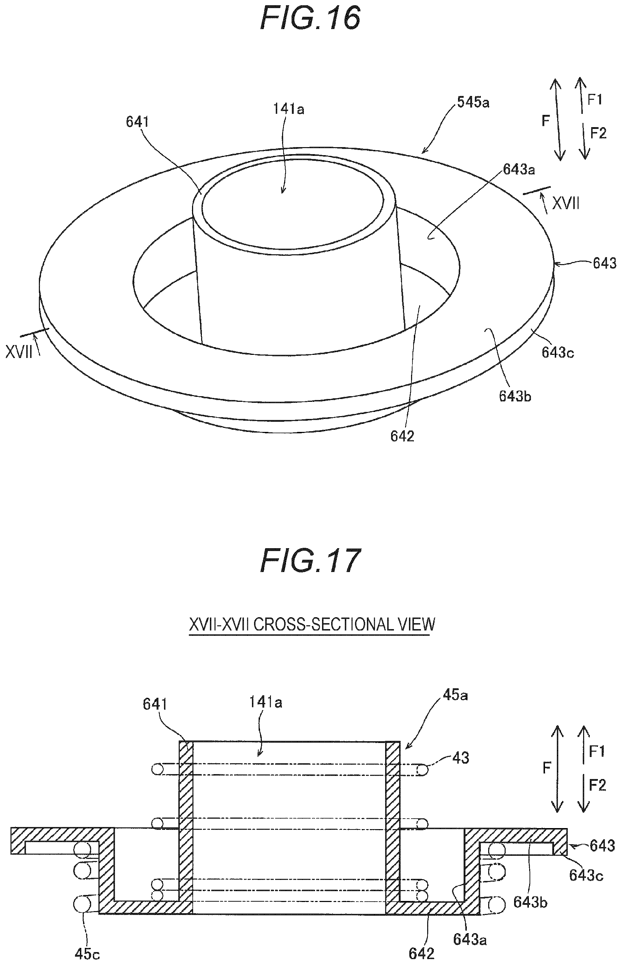

As shown in Figs. 15 and 16, the support portion 545a is formed in a substantially annular shape when viewed from the direction F1. The support portion 45a is formed of metal. Here, the support portion 545a has a cylindrical portion 641, an inner storage portion 642, and an outer storage portion 643 (an example of a "first storage portion" in the appended claims).

The cylindrical portion 541 is formed in a cylindrical shape extending in the F direction. The hole for circulation 141a is formed in the cylindrical portion 541 as a through hole penetrating in the F direction. The cylindrical portion 541 is disposed in the circulation hole 41e. The cylindrical portion 541 is disposed on the inside (on the side of the central axis line C2) the valve seat 41h in a direction orthogonal to the F direction.

The inner storage portion 642 is configured to hold the valve opening urging member 43. Specifically, the inner storage portion 642 is configured as a receiving portion for the valve opening urging member 43.

The outer storage portion 643 is configured to hold the supporting urging member 45c. Specifically, the outer storage portion 643 is configured as a receiving portion for the valve opening urging member 43.

The outer storage portion 643 has an inner peripheral portion 643a, a connecting portion 643b, and an outer peripheral portion 643c. The inner peripheral portion 643a extends from the end portion of the inner storage portion 642 in a direction orthogonal to the F direction toward the F1 direction. The connecting portion 643b connects an end portion of the inner peripheral portion 643a on the F1 direction side and an end portion of the outer peripheral portion 643c on the F1 direction side. The connecting portion 643b extends from an end portion on the F1 direction side of the inner peripheral portion 643a in a direction orthogonal to the F direction. The outer peripheral portion 643c extends from the end portion of the connecting portion 643b in a direction orthogonal to the F direction toward the F2 direction. The length of the outer peripheral portion 643c is shorter than the length of the inner peripheral portion 643a in the F direction.

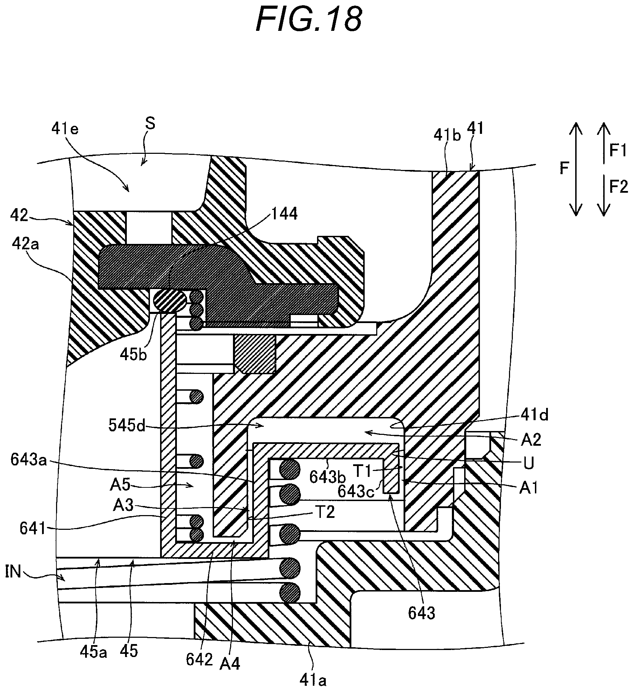

As shown in Fig. 18, after the valve closing operation is started, the support portion 545a is configured to reduce the moving speed of the valve body 42 in the F2 direction when the buffer member 545 moves from the abutting position PS1 (see Fig. 5) to the seating corresponding position PS2 (see Fig. 6) by narrowing a part of the flow path width of the flow path formed by the support portion 545a. That is, by using the flow path resistance of the flow path formed by the support portion 545a as a viscous damper, the support portion 545a is configured to reduce the moving speed of the valve body 42 in the valve closing direction when the buffer member 545 moves from the abutting position PS1 to the seating corresponding position PS2 after the valve closing operation is started.

Specifically, between the support portion 545a and an inner peripheral surface U of the valve body storage portion 41b of the valve main body 41, after the buffer member 545 and the valve body 42 abut on each other and before being seated, a bypass flow path 545d different from the hole for circulation 141a is formed.

The bypass flow path 545d has first to fifth flow paths A1 to A5. The first flow path A1 is a flow path between an outer peripheral surface T1 of the outer peripheral portion 643c of the outer storage portion 643 and the inner peripheral surface U of the valve body storage portion 41b in a direction orthogonal to the F direction. The second flow path A2 is a flow path between the face on the F1 direction side of the connecting portion 643b of the outer storage portion 643 and the inner peripheral surface U of the valve body storage portion 41 b in the F direction. The third flow path A3 is a flow path between an inner peripheral surface T2 of the inner peripheral portion 643a of the outer storage portion 643 and the inner peripheral surface U of the valve body storage portion 41b in a direction orthogonal to the F direction. The fourth flow path A4 is a flow path between the face on the F1 direction side of the inner storage portion 642 and the inner peripheral surface U of the valve body storage portion 41b in the F direction. The fifth flow path A5 is a flow path between the outer peripheral surface of the cylindrical portion 641 and the inner peripheral surface U of the valve body storage portion 41b in a direction orthogonal to the F direction.

The flow path width of each of the first flow path A1 and the third flow path A3 is smaller than the flow path width of the other flow paths (second, fourth and fifth flow paths A2, A4, and A5). Here, the flow path width of each of the first flow path A1 and the third flow path A3 is a minute gap. Thus, in the direction orthogonal to the F2 direction, a minute gap through which the cooling water can flow is formed both between the outer peripheral surface T1 of the outer storage portion 143 and the inner peripheral surface U of the valve body storage portion 41b and between the inner peripheral surface T2 of the outer storage portion 143 and the inner peripheral surface U of the valve body storage portion 41b.

The first flow path A1 and the third flow path A3 maintain a substantially constant flow path width between the buffer member 45 and the valve body 42 after abutting on each other and before being seated. That is, from the abutting position PS1 to the seating corresponding position PS2, the support portion 45a and the valve body 42 move integrally in the F2 direction while being braked by the flow path resistance to the cooling water flowing through the first flow path A1 and the third flow path A3. The other configuration of the third embodiment is the same as the configuration of the first embodiment.

### Effect of Third Embodiment

In the third embodiment, the following effects can be obtained.

In the third embodiment, as described above, after the valve closing operation is started and before the fluid control valve 504 is seated, the fluid control valve 504 is provided with the buffer member 545 that abuts on the valve body 42 moving in the F2 direction to reduce the moving speed of the valve body 42. Then, the buffer member 545 is configured such that, after the buffer member abuts on the valve body 42, an abutting portion (distal end portion 145) on the valve body 42 is movable from the abutting position PS1 on the valve body 42 to the seating corresponding position PS2 corresponding to the seating position PV2 at which the valve body 42 abuts and seats on the valve seat 41h. Thus, it is possible to reduce the collision sound between the valve body 42 and the valve seat 41 h while generating a sufficient valve closing holding force for maintaining the valve-closed state.

In the third embodiment, as described above, the support portion 545a is provided with an outer storage portion 643 provided outside the circulation hole 41e and inside the valve main body 41 in the direction orthogonal to the F2 direction and for storing the supporting urging member 42c. In the direction orthogonal to the F2 direction, in both cases of between the outer peripheral surface T1 of the outer storage portion 643 and the inner peripheral surface U of the valve main body 41 and between the inner peripheral surface T2 of the outer storage portion 643 and the inner peripheral surface U of the valve main body 41, a minute gap through which the cooling water can flow is formed. Accordingly, since the cooling water pushed to the valve body 42 and the support portion 545a moving in the F2 direction flows in the valve main body 41, the cooling water can pass through the minute gap. That is, the moving speed of the support portion 545a can be reduced using the flow path resistance generated when the cooling water passes through the minute gap. As a result, not only the urging force of the supporting urging member 45c but also the flow path resistance can be used to reduce the moving speed of the support portion 545a. Therefore, the moving speed of the valve body 42 can be further reduced as compared with the case where the moving speed of the valve body 42 is reduced by reducing the moving speed of the support portion 545a only by the urging force. The other effects of the third embodiment are the same as those of the first embodiment.

### Modification Example

The embodiments disclosed this time are to be considered in all respects as illustrative and not restrictive. The scope of this disclosure is defined by the terms of the appended claims, rather than the description of the embodiments, and further includes all modifications (modification examples) within the scope and meaning equivalent to the terms of the appended claims.

For example, in the first and second embodiments, an example of the buffer member 45 (245) being configured to move integrally with the valve body 42 to reduce the moving speed of the valve body 42 while the valve body 42 moves from the predetermined position PV3 to the seating position PV2 has been described. However, this disclosure is not limited to this. For example, the buffer member may be configured to reduce the moving speed of the valve body while moving integrally with the valve body while the valve body moves from a position closer to the valve opening position than the predetermined position to the seating position.

In the first and second embodiments, the example in which the cooling water (fluid) flows in the fluid control valve 4 has been described, but this disclosure is not limited to this. In this disclosure, a fluid other than the cooling water such as oil and air may flow in the fluid control valve.

In the first embodiment, the example in which the support portion 45a is formed of metal has been described, but this disclosure is not limited to this. For example, the support portion may be formed of resin or the like.

According to the third embodiment, in the direction orthogonal to the F1 direction (valve closing direction), an example in which a minute gap through which cooling water (fluid) can flow is formed both between the outer peripheral surface T1 of the outer storage portion 143 (first storage portion) and the inner peripheral surface U of the valve main body 41 or between the inner peripheral surface T2 of the outer storage portion 143 (first storage portion) and the inner peripheral surface U of the valve main body 41, but this disclosure is not limited to this. According to this disclosure, in a direction orthogonal to the valve closing direction, at least one of between the outer peripheral surface of the first storage portion and the inner peripheral surface of the valve main body or between the inner peripheral surface of the first storage portion and the inner peripheral surface of the valve main body may be formed with a minute gap through which a fluid can flow. This allows the fluid pushed by the valve body and the support portion moving in the direction F2 to flow through the valve main body, so that the fluid can pass through the minute gap. That is, the moving speed of the support portion can be reduced using the flow path resistance generated when the fluid passes through the minute gap. As a result, not only the urging force of the supporting urging member but also the flow path resistance can be used to reduce the moving speed of the support portion. Therefore, the moving speed of the valve body can be further reduced as compared with the case where the moving speed of the valve body is reduced by reducing the moving speed of the support portion only by the urging force.

In the first embodiment, an example of the buffer member 45 including the supporting urging member 45c (urging member) has been described, but this disclosure is not limited to this. In this disclosure, the buffer member may include a diaphragm instead of the urging member.

In the first embodiment, the buffer member 45 includes both the supporting urging member 45c (urging member) and the minute gap formed by the first flow path A1 and the third flow path A3. However, this disclosure is not limited to this. In this disclosure, the buffer member may include only the urging member or the minute gap.

In the second embodiment, an example in which a plurality (four) of the accommodation recessed portions 41d are provided around the central axis line N of the circulation hole 41e extending in the direction F has been described, but this disclosure is not limited to this. In this disclosure, two to three or five or more accommodation recessed portions may be provided, or may be provided in an annular shape.

In the second embodiment, the example in which the foamed rubber member 345 is disposed at the central position of the accommodation recessed portion 41d in the direction orthogonal to the direction F has been described, but this disclosure is not limited to this. In this disclosure, the foamed rubber member may be disposed at a position deviated from a center position of the accommodation recessed portion in a direction orthogonal to the F direction.

In the second embodiment, an example in which the foamed rubber member 345 is mounted in a state where it is attached and positioned by inserting the retaining portion 452 into the retaining hole 241b has been described. However, this disclosure is not limited to this. For example, the foamed rubber member may be attached to the accommodation recessed portion with an adhesive or the like.

In the second embodiment, the example of the buffer member 245 including the foamed rubber member 345 has been described, but this disclosure is not limited to this. In this disclosure, the buffer member may include a member having elasticity such as a spring.

In the first embodiment, an example in which a plurality (eight) of outflow holes 144 are formed in the cylindrical portion 141 has been described, but this disclosure is not limited to this. In this disclosure, one to seven or nine or more outflow holes may be formed in the cylindrical portion as long as the cooling water can flow out and discharge from the hole for circulation to the outside of the cylindrical portion.

In the first embodiment, an example in which the outflow hole 144 has a substantially rectangular shape when viewed from a direction orthogonal to the F direction, and is formed in a long hole shape elongated in the F direction has been described. However, this disclosure is not limited to this. In this disclosure, the shape of the hole for circulation may be a circular shape, an elliptical shape, a polygonal shape, or the like as long as the cooling water can flow out and discharge from the hole for circulation to the outside of the cylindrical portion.

In the first embodiment, an example in which the plurality of outflow holes 144 are arranged at equal angular intervals in the circumferential direction around the central axis line T of the hole for circulation 141a has been described. However, this disclosure is not limited to this. In this disclosure, the plurality of outflow holes may be arranged at different angular intervals in the circumferential direction around the central axis line of the hole for circulation, or may be arranged in the F direction.

In the first to third embodiments, an example in which the valve main body 41 is integrally formed by ultrasonically welding the inflow-side connecting portion 41a, the valve body storage portion 41b, and the outflow-side connecting portion 41c to each other has been described. However, this disclosure is not limited to this. In this disclosure, the valve main body may be integrally formed with the inflow-side connecting portion, the valve body storage portion, and the outflow-side connecting portion by a welding method other than ultrasonic welding, or may be bolted via a gasket or an O-ring.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

## Claims

1. A fluid control valve (4, 204, 504) comprising:
a valve main body (41, 241) including a circulation hole (41e) configured so that a fluid flows through the circulation hole (41e) and a yoke (41f) that has a valve seat (41h) provided in the circulation hole (41e) and has magnetism;
a valve body (42) configured to control a flow of the fluid flowing out of the circulation hole (41e) by abutting on the valve seat (41h) when the valve body (42) is seated and separating from the valve seat (41h) when the valve (4, 204, 504) is opened, and has magnetism;
an electromagnetic coil (44c) provided on the valve main body (41, 241), and configured to generate a magnetic field in the valve main body (41, 241) to attract the valve body (42) to the valve seat (41h); and
a buffer member (45, 245, 545) that abuts on the valve body (42) that is configured to move in a valve closing direction (F2) to reduce a moving speed of the valve body (42) after a valve closing operation is started and before the valve body (42) is seated, wherein
the buffer member (45, 245, 545) is configured such that, after the buffer member (45, 245, 545) abuts on the valve body (42), an abutting portion on the valve body (42) is movable from an abutting position (PS1) on the valve body (42) to a seating corresponding position (PS2) corresponding to a seating position (PV2) at which the valve body (42) abuts on and seats on the valve seat (41h).

2. The fluid control valve according to claim 1, wherein
at least a distal end portion (145) of the buffer member (45, 245, 545) on the valve body (42) side is disposed at a position separated from the valve body (42) between the valve body (42) and the valve seat (41h) when the valve (4, 204, 504) is opened, and
the buffer member (45, 245, 545) is configured such that the distal end portion (145) as the abutting portion is movable from a position separated from the valve body (42) as the abutting position (PS1) on the valve body (42) to the seating corresponding position (PS2) after the valve closing operation is started.

3. The fluid control valve according to claim 1 or 2, wherein
at least a distal end portion (145) of the buffer member (45, 245, 545) on the valve body side is formed of an elastically deformable material.

4. The fluid control valve according to any one of claims 1 to 3, wherein
at least a distal end portion (145) of the buffer member (45, 245, 545) is disposed inside the valve seat (41h), and
the distal end portion (145) of the buffer member (45, 245, 545) is configured to abut on a portion inside the valve seat (41h), in a valve seat-side surface of the valve body (42) from the abutting position (PS1) on the valve body (42) to the seating corresponding position (PS2) after the valve closing operation is started, and the valve seat (41h) is configured to abut on a portion outside the distal end portion (145) of the buffer member (45, 245, 545), in the valve seat-side surface of the valve body (42) at the seating position (PV2).

5. The fluid control valve according to claim 4, wherein
the buffer member (45, 245, 545) includes
a support portion (45a, 545a) disposed in the circulation hole (41e), and
a first urging member (45c) for urging the support portion (45a, 545a) toward the valve body (42), and
the support portion (45a, 545a) is configured to be urged by the first urging member (45c) to reduce the moving speed of the valve body (42) in the valve closing direction (F2) when the buffer member (45, 245, 545) moves from the abutting position (PS1) to the seating corresponding position (PS2) after the valve closing operation is started.

6. The fluid control valve according to claim 5, wherein
the support portion (45a, 545a) has a cylindrical portion (141, 641) in which a hole for circulation (144) penetrating in the valve closing direction (F2) is formed as a part of the circulation hole (41e), and
the cylindrical portion (141, 641) has an outflow hole (144) which penetrates in a direction orthogonal to the valve closing direction (F2) and is configured to allow the fluid in the hole for circulation to flow out of the cylindrical portion (141, 641).

7. The fluid control valve according to claim 3, wherein
the buffer member (45, 245, 545) includes a foamed rubber member (345) that is configured to cause the distal end portion (145) to abut on the valve seat-side surface of the valve body (42) from the abutting position (PS1) on the valve body (42) to the seating corresponding position (PS2) after the valve closing operation is started, and to absorb a collision load with a magnetic body portion (42a) of the valve body (42)and to reduce the moving speed accompanying a movement of the valve body (42) in the valve closing direction (F2), and
the valve main body (41, 241) includes an accommodation recessed portion (241a) that is depressed in the valve closing direction (F2) and stores the foamed rubber member (345) when seated.
